# EUROPÄISCHE PATENTSCHRIFT

(11) **EP 0 814 397 B1**
(45) Veröffentlichungstag und Bekanntmachung des Hinweises auf die Patenterteilung: **05.03.2008**
(21) Anmeldenummer: 97107757.3
(22) Anmeldetag: 13.05.1997
(51) Int. Cl.: G06F 1/00

(54) **Mobiles Bordcomputersystem mit Bedieneinheiten für Arbeitsmaschinen**
Portable board computer system with control units for working machines
Ordinateur portable de bord avec unités de commande pour machines de travail

(30) Priorität: 17.06.1996 DE 19624027
(43) Veröffentlichungstag der Anmeldung: 29.12.1997
(73) Patentinhaber: CLAAS KGaA, 33428 Harsewinkel (DE)
(72) Erfinder: Autermann, Ludger, 48327 Drensteinfurt (DE); Böttinger, Stefan, Dr., 33647 Bielefeld (DE); Klasbrummel, Klaudia, 33415 Verl (DE); Kollmeier, Klaus, 48159 Münster (DE); Oetzel, Kai, 33824 Werther (DE); Schligten, Ernst-Josef, 48361 Beelen (DE); Steckel, Thilo, 33428 Harsewinkel 3 (DE); Wippersteg, Hans-Herrmann, 32257 Bünde (DE)

(56) Entgegenhaltungen:
- DE-A- 4 016 603
- US-A- 4 630 773
- US-A- 5 184 314
- US-A- 5 331 580
- US-A- 5 408 382

## Beschreibung

Die Erfindung betrifft ein mobiles Bordcomputersystem mit Bedieneinheiten für Arbeitsmaschinen, wobei über das Bordcomputersystem die Arbeitsmaschine mittels der im Bordcomputersystem eingespeicherten und/oder eingegebenen Einstellwerte einstell-, steuer- und/oder regelbar ist und die im Bordcomputersystem eingespeicherten Daten über Eingabevorrichtungen ergänz- und oder veränderbar sind, sowie einer austauschbaren Bedienplatte, die Anzeige- und Eingabevorrichtungen aufweiset.

Ein solches gattungsgemäßes Bordcomputersystem ist beispielsweise aus der DE 40 16 603 bekannt. Ein solches Bordcomputersystem erlaubt zwar eine verbesserte Ansteuerung und Kontrolle der damit ausgerüsteten Arbeitsmaschine, es hat aber den Nachteil, das es relativ teuer ist. Da zudem eine Vielzahl von Arbeitsmaschinen vorhanden sein können, beispielsweise in der Landwirtschaft, die für die Kontrolle und Regelung von Maschinenkomponenten eine zumindest teilweise ähnlich aufgebaute Hard- und Software benötigen, entsteht durch die serienmäßige Ausrüstung der Arbeitsmaschinen mit Bordcomputersytemen die Situation, daß dadurch der Maschinennutzer gezwungen ist, für jede einzelne Arbeitsmaschine jedesmal neu die jeweilige Hard- und Software mit der Arbeitsmaschine zusammen einzukaufen, obwohl er unter Umterständen gar nicht alle Arbeitsmaschinen gleichzeitig benutzt und er dadurch in Kapazitäten investiert, die er in dem Umfang nicht benötigt. Die DE 36 12 767 offenbart eine Fembetätigungseinrichtung bestehend aus einem Befehlsgeber, einem Codiergerät, einer Übertragungsstrecke, einem Decodiergerät und einer Schaltebene. Das Zusammenwirken dieser Elemente ermöglicht die Übertragung von maschinenspezifischen Signalen von einem Schlepper zu einer hieran adaptierten Arbeitsmaschine. Zwar können auch hier einzelne Elemente wie beispielsweise das Codiergerät und Decodiergerät abgenommen und an anderen Maschinen eingesetzt werden, allerdings sind der Befehlsgeber und die Schaltebene auf dem Schlepper nur auf der jeweiligen Arbeitsmaschine anwendbar. Eine universelle mobile Einsatzmöglichkeit auf jeden Maschinentypen ist gerade nicht möglich, vielmehr müssten für unterschiedliche Maschinenarten die jeweiligen Befehlsgeber und Schaltebenen separat gekauft und eingesetzt werden. Hierdurch erhöhen sich die Kosten und auch die Unübersichtlichkeit aufgrund der steigenden Zahl von unterschiedlichen Elementen innerhalb der Maschine. Somit muss sich der Fahrer stets mit neuen Schaltebenen vertraut machen. Ein einfaches Einsetzen eines kompletten Systems ist damit gerade nicht möglich, um eine Einsatzbereitschaft unterschiedlicher Maschinen zu gewährleisten.

Demgemäß ist es die Aufgabe der vorliegenden Erfindung, ein Bordcomputersystem zu schaffen, das möglichst auf einer Vielzahl von Arbeitsmaschinen einsetzbar ist und dadurch eine Kostenentlastung der Maschinennutzer ermöglicht.

Die erfindungsgemäße Aufgabe wird gelöst, indem das Bordcomputersytem in einer tragbaren Hülle eingebaut, die tragbare Hülle mit der Arbeitsmaschine lösbar verbunden und die tragbare Hülle auf verschiedenen Arbeitsmaschinen montierbar ist. Durch die erfindungsgemäße Anordnung eines Bordcomputersystems kann dieses leicht von einer Maschine abgebaut und auf einer anderen Maschine aufgebaut werden, beispielsweise von einem Ackerschlepper auf einen Teleskoplader, von dort auf einen Geländewagen, ins Büro oder auch für Kontrollgänge auf dem Feld in einem Haltegürtel. Dadurch, daß ein komplettes Bordcomputersystem einschließlich einer zentralen Rechnereinheit mit Bedien- und Anzeigeteil und eventuell mit zugehöriger Software und möglicherweise anderen Komponenten durch die erfindungsgemäßen Merkmale leicht austauschbar ist, kann es für mehrere Arbeitsmaschinen eingesetzt werden, wodurch für den Maschinennutzer eine spürbare Kostenentlastung möglich wird.

Das Bordcomputersystem sollte über zumindest einen Flachbildschirm als Anzeigevorrichtung verfügen, um für die Anzeigen in verschiedenen Arbeitsmaschinen anpaßbar zu sein. Das Bordcomputersystem kann mit unterschiedlichen Komponenten ausgestattet sein. Zusätzlich zur Recheneinheit mit Bedien- und Anzeigeteil können zusätzlich beispielsweise eine oder mehrere Kommunikationseinheiten, Navigations-/Positionsermittlungseinheiten, und oder Datenspeichereinheiten fest oder austauschbar in der tragbaren Hülle eingebaut sein. Der Anschluß und Einbau der zusätzlichen Module kann über genormte Schnittstellen (beispielsweise PCMCIA-Slots) und Einschubfächer für die Modulgehäuse erfolgen. Für eine Kommunikationseinheit können beispielsweise mehrere unterschiedliche Modems für unterschiedliche Kommunikationsverfahren, wie beispielsweise Modacom, GSM, Betriebsfunk etc. austausch- und einsetzbar sein. Als Datenspeichereinheit können beispielsweise Disketten- oder CD-ROM-Laufwerke, Magnetkartenleser oder PCMCIA-Karten modular austauschbar eingesetzt werden. Die anfallenden Daten können jedoch auch alternativ oder additiv online von Dritten Datenspeichern über Telekommunikationsmittel abgesichert abgespeichert oder eingelesen werden. Zudem können an das Bordcomputersystem ein oder mehrere externe Bedieneinheiten angeschlossen werden, wie beispielsweise ein Joystick, ein Multifunktionsgriff oder eine Tastatur. Durch solche externe Bedieneinheiten können die Bedienmöglichkeiten über den durch das in der tragbaren Hülle eingebaute Bordcomputersystem ermöglichte Maß hinaus erweitert werden. Durch eine intelligente Software zwischen externer Bedieneinheit und Bordcomputersystem ist es möglich, daß beispielsweise Bedienfunktionen der externen Bedieneinheit gelernt werden können oder es eine aktive Rückmeldung des Zustandes einer geschalteten Arbeitsmaschineneinheit gibt. Insgesamt sollte die tragbare Hülle so aufgebaut sein, daß zusätzliche Einheiten modular mit möglichst geringem Aufwand ein-, an- und ausbaubar sind. Durch den modularen Aufbau ist es möglich, aufwendiger ausgestattete Bordcomputereinheiten, beispielsweise mit Navigationssystemen ausgestattete Bordcomputer, auf unterschiedlichen Maschinen zu nutzen, auf denen gerade die Navigationsfunktion benötigt wird. Dazu wird dann entweder die komplette tragbare Hülle ausgetauscht, oder die Navigationsmodule werden in die tragbare Hülle der anderen Arbeitsmaschine eingesteckt. Ein solcher Austausch ist selbstverständlich auch mit oder wegen anderer Modulbausteine möglich.

Bevorzugt wird das Bordcomputersystem in der tragbaren Hülle auf eine mit der Arbeitsmaschine fest verbundene Dockingstation aufgesetzt. Die Dockingstation kann über einen zusätzlichen Halter mit der Arbeitsmaschine fest verbunden sein. Auf der Arbeitsmaschine kann auch ein Einschub- oder Stellfach vorgesehen sein, in das die tragbare Hülle einschieb- oder einstellbar ist. Die Anschlüsse zwischen dem Bordcomputersystem und der Arbeitsmaschine sind über Steckkontakte herstellbar, die sich an der tragbaren Hülle einerseits und der Dockingstation oder dem Einschub- oder Einstellfach andererseits befinden und welche durch Einschieben oder Einstellen der tragbaren Hülle in die Arbeitsposition miteinander verbindbar sind. Die Dockingstation selbst als Anschlußeinheit kann weitere Baugruppen enthalten, beispielsweise RAM- und/oder ROM-Speicher, Steckkontakte für die Maschinenanbindung, Elektronik zum Erfassen und Vorauswerten von elektrischen Signalen, Warnhupen, Drucker, genormte Schnittstellen oder auch Anschlußmöglichkeiten für Handscanner. Auch kann in einem in der Dockingstation angeordneten EEPROM oder EPROM eine bestimmte Maschinenkennung für bestimmte Kalibrierwerte, Einstellgrößen etc. abgelegt sein. Zusätzlich kann auch die tragbare Hülle mit dem Bordcomputer und eventuell noch weiteren Modulen über genormte Schnittstellen und Anschlußstecker zum Anschluß von weiteren Geräten an den Bordcomputer oder die zusätzlichen Module verfügen.

Die vielseitige Einsetzbarkeit eines in einer tragbaren Hülle eingebauten Bordcomputersystems wird erst ermöglicht, indem auf den Anzeigevorrichtungen des Bordcomputersystems zumindest teilweise Anzeigebilder darstellbar sind, die spezifische Elemente derjenigen Maschine enthalten, mit der das Bordcomputersystem aktuell verbunden ist. Neben einer neutralen Ausgestaltung der Bedienelemente des Bordcomputersystems wird die arbeitsmaschinenindividuelle Funktionalität also über zumindest teilweise arbeitsmaschinenspezifische Anzeigebilder erreicht. Einzelne oder mehrere Funktionszustände der vom Bordcomputer zu steuernden Maschine im Ganzen oder in Baugruppen können auf zumindest einer Anzeigevorrichtung des Bordcomputersystems graphisch so dargestellt werden, beispielsweise über Piktogramme oder eine bildliche Darstellung der Arbeitsmaschine, daß der Funktions- oder Schaltzustand optisch erkennbar ist. Um die jeweiligen Anzeigebilder verfügbar zu haben, können eines oder mehrere der Anzeigebilder einer Anzeigevorrichtung des Bordcomputersystems im Terminal gespeichert sein und über ein Anzeigemenue oder eine Kommunikation des Bordcomputersystems mit der Dockingstation oder der Elektronik der Arbeitsmaschine ausgewählt werden. Es können aber auch anstatt oder zusätzlich eines oder mehrere der Anzeigebilder einer Anzeigevorrichtung des Bordcomputersystems in der Dockingstation oder an anderer Stelle der Arbeitsmaschine gespeichert sein und über eine automatisierte oder menuegeführte Kommunikation des Bordcomputersystems mit der Dockingstation oder nachgeordneten elektronischen Elementen der Arbeitsmaschine nach dem Andocken in den Arbeitsspeicher des Bordcomputersystems geladen ist. Um eine richtige Aussage des Anzeigebildes sicherzustellen, vergleicht das Bordcomputersystem den aktuellen Aussagewert eines oder mehrerer Anzeigebilder einer Anzeigevorrichtung des Bordcomputersystems mit dem jeweiligen Istzustand der angezeigten Funktion der Arbeitsmaschine über ein Datenbussystem und berichtigt bei Abweichungen zwischen dem Aussagewert des Anzeigebildes und des Istzustandes der angezeigten Funktion den Aussagewert des Anzeigebildes. Ein solcher Vergleich kann durch eine geeignete Software vorgenommen werden, die die Signale einer entsprechenden Sensorik auswertet.

Die Erfindung wird im folgenden anhand eines Ausführungsbeispiels näher beschrieben. Es zeigen:
- Figur 1: einen schematischen Querschnitt durch einen erfindungsgemäßen Bordcomputer in einer tragbaren Hülle,
- Figur 2: eine schematisch dargestellte Einbausituation in einer Arbeitsmaschine mit Einstellfach,
- Figur 3: eine mögliche Bedienoberfläche eines Bordcomputers in einer tragbren Hülle,
- Figur 4: ein Beispiel für ein Bedienbild, das auf dem Anzeigemonitor des Bordcomputersystems angezeigt ist.

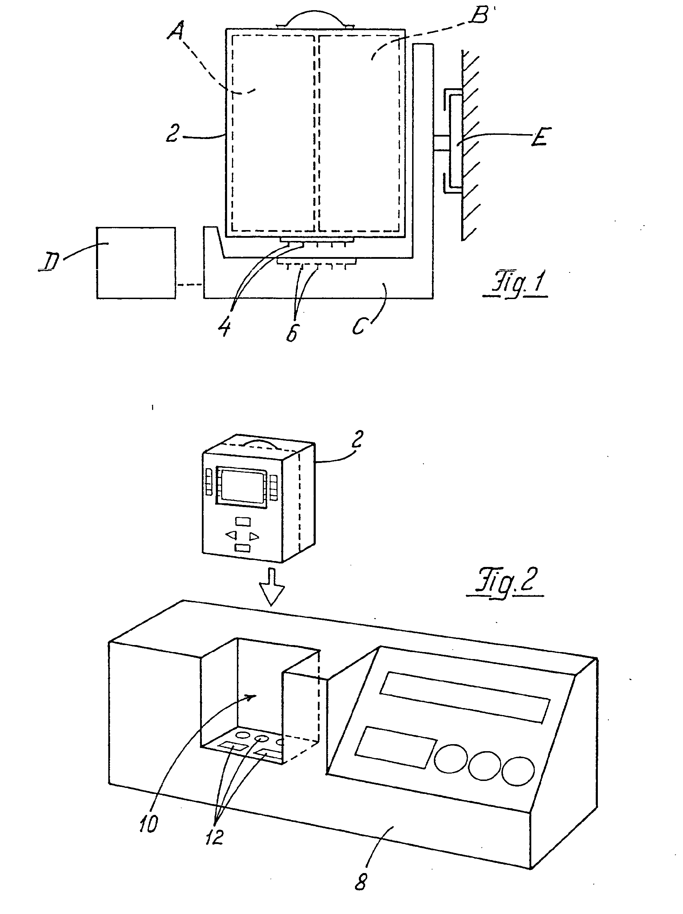

In Figur 1 ist der schematische Aufbau eines erfindungsgemäßen Bordcomputersystems erkennbar. In der tragbaren Hülle 2 sind die Rechnereinheit A und die Kommunikationseinheit B angeordnet. An der Unterseite der tragbaren Hülle 2 befinden sich Stecker 4, die in die an der Dockingstation C befindliche Stecker 6 aufgesteckt werden müssen, um eine Verbindung zwischen der tragbaren Hülle 2 und der Dockingstation C herzustellen. Die Dockingstation C ist wiederum mit der Fahrzeughalterung E verbunden. An die Dockingstation C, die tragbare Hülle 2, die Rechnereinheit A oder die Kommunikationseinheit B kann zusätzlich noch eine Bedieneinheit D angeschlossenen werden, je nachdem, welche Funktion die Bedieneinheit D hat und an welches Modul es sinnvollerweise angeschlossen wird.

In Figur 2 ist eine Bedienkonsole 8 erkennbar, in sich ein Einstellfach 10 befindet, das zu den Abmessungen der tragbaren Hülle des Bordcomputersystems etwa paßt. Eine Bedienkonsole 8 kann auf einem Mähdrescher, Schlepper, oder einer sonstigen Arbeitsmaschine vorhanden sein. Gut erkennbar sind die Anschlußsockel 12, zu denen sich entsprechende Gegenstücke an der Unterseite der tragbaren Hülle 2 des Bordcomputersystems befinden und die beim Einstellen der tragbaren Hülle 2 in das Einstellfach 10 miteinander in Wirkverbindung geraten. Damit sich bei starken Maschinenvibrationen, der Durchfahrt von Schlaglöchern oder anderen widrigen Umständen die Wirkverbindung nicht mehr löst, wird vorgeschlagen, für die tragbare Hülle 2 eine Klemmbefestigung oder eine ähnliche Einrichtung vorzusehen, die ein unbeabsichtigtes Lösen der Verbindung an den Steckkontakten verhindert.

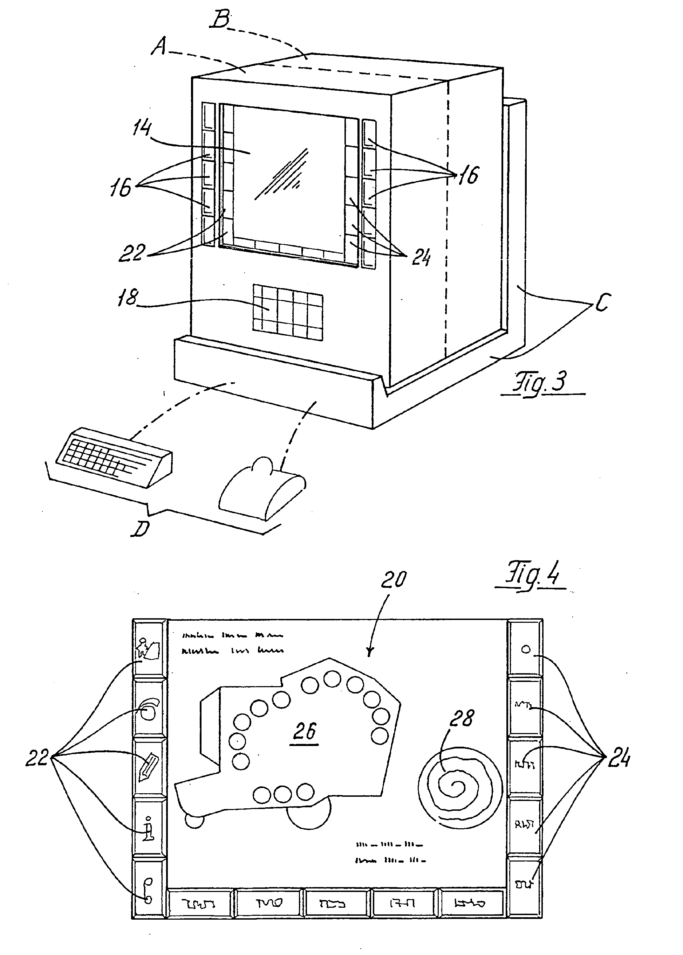

In Figur 3 ist eine mögliche Bedienoberfläche einer Rechnereinheit A mit Bedien- und Anzeigeinheiten in einer einer tragbaren Hülle 2 gezeigt, die mit einer Kommunikationseinheit B zusammengebaut und auf eine Dockingstation C aufgesteckt ist. Neben dem Flachbildschirm 14 befinden sich Bedientasten 16, die gewöhnlich zu einem Anzeigebild des Flachbildschirms 14 korrespondieren und eine auf dem Flachbildschirm im Anzeigebild einer Bedientaste zugeordnete Funktion einer zugehörigen Arbeitsmaschine schalten. In dem Bedienfeld 18 sind Tasten angeordnet, die der Maschinennutzer zur Menüführung im Anzeigebild des Flachbildschirmes 14 und zur Eingabe von Befehlen oder Daten nutzen kann. Die Bedienoberfläche ist allgemein gehalten und enthält keinerlei arbeitsmaschinenspezifische Beschriftungen der Tastatur. Die arbeitsmaschinenspezifischen Bedienoberflächen entstehen erst im Zusammenwirken der neutralen Tastatur der Bedienoberfläche mit den arbeitsmaschinenspezifischen Anzeigebildern des Flachbildschirms 14.

Figur 4 zeigt ein beispielhaftes arbeitsmaschinenspezifisches Anzeigebild des Flachbildschirms 14. Das Anzeigebild 20 zeigt eine Rundballenpresse 26 mit einem gerade ausgeworfenen Rundballen 28, die aktuell vom Bordcomputersystem gesteuert wird. Auf der linken Seite des Anzeigebildes 20 befinden sich symbolische Darstellungen 22, die bestimmte Menuebefehle darstellen, die bei Betätigung der neben den jeweiligen Symbolfeldern angrenzenden Tasten 16 des Bedienfeldes von der Software ausgeführt werden und neue Menuebilder generieren. Auf der rechten Seite des Anzeigebildes 20 befinden sich symbolische Darstellungen 24, mit denen durch Betätigung der neben den jeweiligen Symbolfeldern angrenzenden Tasten 16 des Bedienfeldes die symbolisch angedeuteten Funktionen der Arbeitsmaschine ein- oder ausgeschaltet werden, beispielsweise die Schneideinrichtung der Rundballenpresse, die Garn- oder Netzbindung, der Ballenauswurf oder sonstige Funktionen. An anderen Stellen des Anzeigebildes können Auftragsdaten, Kundendaten, Drehzahlen, Geschwindigkeiten, Uhrzeiten, Öl- und Hydraulikdrücke, Warnsymbole oder sonstige Anzeigen vorgesehen werden. Das hier gezeigte Anzeigebild 20 ist nur beispielhaft, es kann auch völlig anders mit anderer Symbolik und räumlicher Anordnung gewählt werden. Neben den reinen Maschinenfunktionen können die Anzeigevorrichtungen eines Bordcomputersystems auch arbeitsmaschinenunabhängige Daten anzeigen, beispielsweise, wenn das das Bordcomputersystem als Laptop mit Textverarbeitung, Tabellenkalkulation und Graphik genutzt und eine Anzeigevorrichtung als Bildschirm für den Laptop dient oder wenn über die Anzeigevorrichtung die Abläufe der Kommunikation der Kommunikationseinheit B mit externen Kommunikationspartnern oder kommunizierte Dateien angezeigt werden.

## Patentansprüche

1. Bordcomputersystem mit Bedieneinheiten für Arbeitsmaschinen, wobei über das Bordcomputersystem die Arbeitsmaschine mittels der im Bordcomputersystem eingespeicherten und/oder eingegebenen Einstellwerte einstell-, steuer- und/oder regelbar ist und die im Bordcomputersystem eingespeicherten Daten über Eingabevorrichtungen ergänz- und/oder veränderbar sind, sowie einer austauschbaren Bedienplatte, die Anzeige- und Eingabevorrichtungen aufweist,
**dadurch gekennzeichnet,**
**daß** das Bordcomputersystem in einer tragbaren Hülle (2) eingebaut, die tragbare Hülle (2) mit der Arbeitsmaschine lösbar verbunden und die tragbare Hülle (2) auf verschiedenen Arbeitsmaschinen montierbar ist.

2. Bordcomputersystem nach Anspruch 1,
**dadurch gekennzeichnet,**
**daß** das Bordcomputersystem über zumindest einen Flachbildschirm (14) als Anzeigevorrichtung verfügt.

3. Bordcomputersystem nach Ansprüch 1 oder 2,
**dadurch gekennzeichnet,**
**daß** in der tragbaren Hülle (2) zumindest eine Rechnereinheit (A) mit Bedien-(18) und Anzeigeteil (20) und wahlweise zusätzlich eine oder mehrere Kommunikationseinheiten (8) Navigations-/Positionsermittlungseinheiten und/oder Datenspeichereinheiten in der tragbaren Hülle (2) eingebaut sind.

4. Bordcomputersystem nach einem der Ansprüche 1 bis 3,
**dadurch gekennzeichnet,**
**daß** an das Bordcomputersystem ein oder mehrere externe Bedieneinheiten (D) anschließbar sind.

5. Bordcomputersystem nach einem der Ansprüche 1 bis 4,
**dadurch gekennzeichnet,**
**daß** die tragbare Hülle (2) so aufgebaut ist, daß zusätzliche Einheiten (A, B) modular ein-, anoder ausbaubar sind.

6. Bordcomputersystem nach einem der Ansprüche 1 bis 5,
**dadurch gekennzeichnet,**
**daß** das Bordcomputersystem in der tragbaren Hülle (2) auf eine mit der Arbeitsmaschine fest verbundene Dockingstation (C) aufgesetzt ist.

7. Bordcomputersystem nach Anspruch 6,
**dadurch gekennzeichnet,**
**daß** die Dockingstation (C) über einen zusätzlichen Halter (E) mit der Arbeitsmaschine fest verbunden ist.

8. Bordcomputersystem nach einem der Ansprüche 1 bis 7,
**dadurch gekennzeichnet,**
**daß** auf der Arbeitsmaschine ein Einschub- oder Einstellfach (10) vorgesehen ist, in die die tragbare Hülle (2) einschieb- oder einstellbar ist.

9. Bordcomputersystem nach einem der Ansprüche 1 bis 8,
**dadurch gekennzeichnet,**
**daß** die Anschlüsse zwischen dem Bordcomputersystem und der Arbeitsmaschine über Steckkontakte (4,6) herstellbar sind, die sich an der tragbaren Hülle (2) einerseits und der Dockingstation (C) oder dem Einschubfach (10) andererseits befinden und welche durch Einschieben oder Einstellen der tragbaren Hülle (2) in die Arbeitsposition miteinander verbindbar sind.

10. Bordcomputersystem nach einem der Ansprüche 1 bis 9,
**dadurch gekennzeichnet,**
**daß** die tragbare Hülle (2) mit dem Bordcomputer über genormte Schnittstellen und Anschlußstecker (4,6) zum Anschluß von weiteren Geräten an den Bordcomputer verfügt.

11. Bordcomputersystem nach einem der Ansprüche 1 - 10, **dadurch gekennzeichnet, dass**,
die Dockingstation (C) als Anschlusseinheit über RAM- und/oder ROM Speicher verfügt, deren Inhalt sie ganz oder teilweise zur Übertragung an das Bordcomputersystem nach dem Andocken der tragbaren Hülle (2) bereithält.

12. Bordcomputersystem nach Anspruch 11,
**dadurch gekennzeichnet,**
**daß** die Dockingstation (C) elektrische Signale erfassen und vorauswerten kann.

13. Bordcomputersystem nach einem der Ansprüche 1 bis 12,
**dadurch gekennzeichnet,**
**daß** zumindest eine Anzeigevorrichtung des Bordcomputersystems zumindest teilweise
Anzeigebilder (20) zeigt, die spezifische Elemente derjenigen Maschine enthalten, mit der das Bordcomputersystem verbunden ist.

14. Bordcomputersystem nach Anspruch 13,
**dadurch gekennzeichnet,**
**daß** einzelne oder mehrere Funktionszustände der vom Bordcomputer zu steuernden Maschine im Ganzen oder in Baugruppen auf zumindest einer Anzeigevorrichtung des Bordcomputersystems graphisch so dargestellt werden, daß der Funktions- oder Schaltzustand optisch erkennbar ist.

15. Bordcomputersystem nach Anspruch 12 oder 14,
**dadurch gekennzeichnet,**
**daß** eines oder mehrere der Anzeigebilder (20) einer Anzeigevorrichtung des Bordcomputersystems in eine Recheneinheit (A) gespeichert und über ein Anzeigemenue oder über eine Kommunikation des Bordcomputersystems mit der Elektronik der Dockingstation (C) oder der Arbeitsmaschine ausgewählt sind.

16. Bordcomputersystem nach einem der Ansprüche 1 bis 15,
**dadurch gekennzeichnet,**
**daß** eines oder mehrere der Anzeigebilder (20) einer Anzeigevorrichtung des Bordcomputersystems in der Dockingstation (C) der an anderer Stelle der Arbeitsmaschine gespeichert ist und über eine Kommunikation des Bordcomputersystems mit der Dockingstation (C) oder nachgeordneten elektronischen Elementen der Arbeitsmaschine nach dem Andocken in den Arbeitsspeicher des Bordcomputersystems geladen ist.

17. Bordcomputersystem nach einem der Ansprüche 1 bis 16,
**dadurch gekennzeichnet,**
**daß** das Bordcomputersystem den aktuellen Aussagewert eines oder mehrerer Anzeigebilder (20) einer Anzeigevorrichtung des Bordcomputersystems mit dem jeweiligen Istzustand der angezeigten Funktion der Arbeitsmaschine über ein Datenbussystem vergleicht und bei Abweichungen zwischen dem Aussagewert des Anzeigebildes (20) und des Istzustandes der angezeigten Funktion den Aussagewert des Anzeigebildes (20) berichtigt.

## Claims

1. An on-board computer system with operating units for working machines, wherein the working machine is adjustable, controllable and/or regulatable by way of the on-board computer system by means of the adjusting values which are stored in and/or inputted into the on-board computer system and the data stored in the on-board computer system can be supplemented and/or modified by way of input devices, and an exchangeable operating board having display and input devices,
**characterised in that**
the on-board computer system is installed in a portable case (2), the portable case (2) is releasably connected to the working machine and the portable case (2) can be mounted on different working machines.

2. An on-board computer system according to claim 1 **characterised in that** the on-board computer system has at least one flat display screen (14) as the display device.

3. An on-board computer system according to claim 1 or claim 2 **characterised in that** at least one computing unit (A) with operating portion (18) and display portion (20) is installed in the portable case (2) and selectively in addition one or more communication units (18), navigation/position-determining units and/or data storage units are installed in the portable case (2).

4. An on-board computer system according to one of claims 1 to 3 **characterised in that** one or more external operating units (D) can be connected to the on-board computer system.

5. An on-board computer system according to one of claims 1 to 4 **characterised in that** the portable case (2) is so designed that additional units (A, B) can be fitted in or on or removed from same in modular fashion.

6. An on-board computer system according to one of claims 1 to 5 **characterised in that** the on-board computer system is placed in the portable case (2) on a docking station (C) fixedly connected to the working machine.

7. An on-board computer system according to claim 6 **characterised in that** the docking station (C) is fixedly connected to the working machine by way of an additional holder (E).

8. An on-board computer system according to one of claims 1 to 7 **characterised in that** provided on the working machine is an insertion or push-in compartment (10) into which the portable case (2) can be inserted or pushed in.

9. An on-board computer system according to one of claims 1 to 8 **characterised in that** the connections between the on-board computer system and the working machine can be made by way of plug contacts (4, 6) which are disposed on the portable case (2) on the one hand and the docking station (C) or the insertion compartment (10) on the other hand and which can be connected together by the portable case (2) being pushed into or inserted into the working position.

10. An on-board computer system according to one of claims 1 to 9 **characterised in that** the portable case (2) with the on-board computer has standardised interfaces and connecting plugs (4, 6) for the connection of further units to the on-board computer.

11. An on-board computer system according to one of claims 1 to 10 **characterised in that** the docking station (C) as a connecting unit has RAM and/or ROM memories, the content of which it holds in readiness entirely or partially for transmission to the on-board computer system after docking of the portable case (2).

12. An on-board computer system according to claim 11 **characterised in that** the docking station (C) can detect and pre-evaluate electrical signals.

13. An on-board computer system according to one of claims 1 to 12 **characterised in that** at least one display device of the on-board computer system at least partially shows display images (20) which contain specific elements of that machine to which the on-board computer system is connected.

14. An on-board computer system according to claim 13 **characterised in that** individual ones or a plurality of functional states of the machine to be controlled by the on-board computer are graphically represented as a whole or in structural groups on at least one display device of the on-board computer in such a way that the functional or switching state can be visually recognised.

15. An on-board computer system according to claim 12 or claim 14 **characterised in that** one or more of the display images (20) of a display device of the on-board computer is stored in a computing unit (A) and selected by way of a display menu or by way of a communication of the on-board system with the electronics of the docking station (C) or the working machine.

16. An on-board computer system according to one of claims 1 to 15 **characterised in that** one or more of the display images (20) of a display device of the on-board computer is stored in the docking station (C) or at another location of the working machine and is loaded into the working memory of the on-board computer system by way of a communication of the on-board computer system with the docking station (C) or downstream-arranged electronic elements of the working machine after docking.

17. An on-board computer system according to one of claims 1 to 16 **characterised in that** the on-board computer system compares the prevailing information value of one or more display images (20) of a display device of the on-board computer system to the respective actual state of the displayed function of the working machine by way of a databus system and in the event of deviations between the information value of the display image (20) and the actual state of the displayed function corrects the information value of the display image (20).

## Revendications

1. Système d'ordinateur de bord comportant des unités de commande de machines de travail, qui permet de régler, commander et/ou réguler la machine de travail au moyen de valeurs de réglage enregistrées et/ou entrées dans ce système, avec possibilité de compléter et/ou de modifier par des dispositifs d'entrée, les données enregistrées dans ce système qui comprend aussi une plaque de commande échangeable, présentant des dispositifs d'affichage et d'entrée, **caractérisé en ce que** le système d'ordinateur de bord est logé dans un boîtier portable (2) qui est relié de manière amovible à la machine de travail et peut être monté sur différentes machines de travail.

2. Système d'ordinateur de bord selon la revendication 1, **caractérisé en ce que** le système dispose d'au moins un écran plat (14) en tant que dispositif d'affichage.

3. Système d'ordinateur de bord selon la revendication 1 ou 2, **caractérisé en ce que** dans le boîtier portable (2) sont montées au moins une unité de calcul (A) comportant une partie de commande (18) et une partie d'affichage (20), avec au choix en plus une ou plusieurs unité de communication (8), unités de navigation/détermination de position et/ou unités d'enregistrement de données.

4. Système d'ordinateur de bord selon une des revendications 1 à 3, **caractérisé en ce que** ce système peut être raccordé à u ne ou plusieurs unités de commande (D) externes.

5. Système d'ordinateur de bord selon une des revendications 1 à 4, **caractérisé en ce que** le boîtier portable (2) est constitué de manière que des unités supplémentaires (A, B) peuvent être introduites de manière modulaire dans ce boîtier, ou en être retirées.

6. Système d'ordinateur de bord selon une des revendications 1 à 5, **caractérisé en ce que** ce système, dans son boîtier portable (2), peut être monté sur un poste d'amarrage (6) solidaire de la machine de travail.

7. Système d'ordinateur de bord selon la revendication 6, **caractérisé en ce que** la solidarité du poste d'amarrage (6) et de la machine de travail est assurée par un support auxiliaire (E).

8. Système d'ordinateur de bord selon une des revendications 1 à 7, **caractérisé en ce que** sur la machine de travail est prévu un casier de coulissement ou de placement (10) dans lequel le boîtier portable (2) peut être coulissé ou placé.

9. Système d'ordinateur de bord selon une des revendications 1 à 8, **caractérisé en ce que** les raccordements entre le système d'ordinateur de bord et la machine de travail peuvent être réalisés au moyen de contacts à enfichage (4, 6) qui se trouvent sur le boîtier portable (2) d'une part et sur le poste d'amarrage (C) ou le casier de coulissement (10) d'autre part et qui peuvent être reliés entre eux en position de travail par coulissement ou placement du boîtier portable (2).

10. Système d'ordinateur de bord selon une des revendications 1 à 9, **caractérisé en ce que** le boîtier portable (2) avec l'ordinateur de bord dispose d'interfaces normalisées et de fiches de raccordement (4, 6) pour raccorder à l'ordinateur d'autres appareils.

11. Système d'ordinateur de bord selon une des revendications 1 à 10, **caractérisé en ce que** le poste d'amarrage (C) dispose d'une unité de raccordement et de mémoires RAM et/ou ROM dont le contenu se tient prêt en entier ou en partie à être transmis au système d'ordinateur de bord après l'amarrage du boîtier portable (2).

12. Système d'ordinateur de bord selon la revendication 11, **caractérisé en ce que** le poste d'amarrage (C) peut recevoir des signaux et les préexploiter.

13. Système d'ordinateur de bord selon une des revendications 1 à 12, **caractérisé en ce qu'**au moins un dispositif d'affichage du système d'ordinateur de bord montre au moins en partie des images (20) qui comprennent des éléments spécifiques de la machine à laquelle est relié le système d'ordinateur de bord.

14. Système d'ordinateur de bord selon la revendication 13, **caractérisé en ce qu'**un ou plusieurs états fonctionnels de la machine que doit commander l'ordinateur de bord sont représentés graphiquement en entier ou en groupes sur au moins un dispositif d'affichage du système d'ordinateur de bord, de manière que l'état fonctionnel ou l'état de commutation est visible.

15. Système d'ordinateur de bord selon la revendication 12 ou 14, **caractérisé en ce qu'**une ou plusieurs des images (20) du dispositif d'affichage du système d'ordinateur de bord est (sont) enregistrée(s) dans l'unité de calcul et sont sélectionnées au moyen d'un menu d'affichage ou d'une communication du système d'ordinateur de bord avec le poste d'amarrage (C) ou la machine de travail.

16. Système d'ordinateur de bord selon une des revendications 1 à 15, **caractérisé en ce qu'**une ou plusieurs des images (20) du dispositif d'affichage du système d'ordinateur de bord sont enregistrées dans le poste d'amarrage (C) ou en un autre endroit de la machine de travail et, par une communication entre le système et le poste d'amarrage (C) ou avec des éléments électroniques disposés en aval et appartenant à la machine de travail, sont chargées dans la mémoire de travail du système, après amarrage de celui-ci.

17. Système d'ordinateur de bord selon une des revendications 1 à 16, **caractérisé en ce que** le système d'ordinateur de bord compare la valeur actuelle de l'information donnée par une ou plusieurs images (20) sur le dispositif d'affichage de l'ordinateur de bord chaque fois à l'état réel du fonctionnement de la machine donné par un système bus de données, et quand apparaissent des écarts entre la valeur de l'information donnée par l'image (20) et l'état réel de fonctionnement indiqué, le système effectue une correction de la valeur de l'information donnée par l'image (20).
